# DEMANDE DE BREVET EUROPEEN

(11) **EP 0 550 328 A1**
(43) Date de publication de la demande: **07.07.1993**
(21) Numéro de dépôt: 92403528.0
(22) Date de dépôt: 22.12.1992
(51) Int. Cl.: H04L 12/56

(54) **Dispositif et procédé de détermination de l'histogramme de débit de circuits virtuels**

(30) Priorité: 30.12.1991 FR 9116314
(71) Demandeur: ALCATEL CIT, F-75008 Paris (FR)
(72) Inventeur: Vinel, Paul, F-78140 Vélizy (FR)
(74) Mandataire: Sciaux, Edmond

(57) **Abrégé**

Un dispositif de détermination de l'histogramme de débits de cellules de circuits virtuels empruntant une voie de transmission à multiplexage temporel asynchrone pendant une période d'analyse prédéterminée comprend :
- une horloge (TC) aménagée pour fournir une heure courante (B),
- une première mémoire (DA) dans laquelle un emplacement contient l'heure de début (A) qui était l'heure courante observée et enregistrée à l'occasion de la réception d'une cellule antérieure,
- des premiers moyens pour établir, lors de l'arrivée d'une nouvelle cellule pendant la période d'analyse prédéterminée, la durée inter-cellule (Δt) = B-A, donc le débit instantané du circuit, puis pour enregistrer cette heure courante (B) comme nouvelle heure de début (A) dans l'emplacement de la première mémoire,
- des seconds moyens pour comparer cette durée inter-cellule (Δt) avec des seuils progressifs (Sᵢ) préétablis, pour déterminer l'index (NI) de l'intervalle de valeurs de débit correspondant et pour incrémenter d'une unité l'emplacement (NG,NI) correspondant à cette intervalle de valeurs de débit dans une seconde mémoire (MH).

## Description

La présente invention est relative à un dispositif et procédé de détermination de l'histogramme de débit de circuits virtuels acheminant des cellules et empruntant une voie de transmission à multiplexage temporel asynchrone.

Une voie de transmission à multiplexage temporel asynchrone est une voie de transmission acheminant des messages de données dans des structures de données numériques appelées cellules. Chaque cellule comprend une entête, ou champ d'identification, constituée, par exemple, de cinq caractères à 8 bits et un corps de message constitué d'un nombre défini de caractères, 48 par exemple. Sur la voie de transmission, de telles cellules se suivent sans interruption. Si il n'y a pas de message à transmettre, la voie de transmission achemine une cellule "vide", c'est-à-dire une cellule de même format qu'une cellule de message et comportant une information conventionnelle, aisément reconnaissable. Des dispositions sont prises pour maintenir une proportion suffisante de telles cellules vides dans le flot des cellules de message.

Le champ d'identification de chaque cellule de message contient sur trois caractères par exemple, une information définissant, à l'intention de l'extrémité de réception, la destination vers laquelle le corps de message devra être retransmis. Les deux autres caractères de l'entête contiennent des informations de service. La même information de destination se retrouve dans des cellules irrégulièrement espacées appartenant à une même communication. Elle identifie ainsi, une sorte de circuits virtuels attribuée à cette communication, qui occupe une partie de la capacité de transmission de la voie de transmission.

Plus généralement, ce circuit virtuel va occuper la voie de transmission en lui apportant un certain débit, mesuré par exemple en cellules par unités de temps, et ce débit est fluctuant, par rapport à un débit nominal attribué aux circuits virtuels, à cause des caractéristiques de la source de message et/ou à cause de celles des équipements de transmission antérieurement traversés. La voie de transmission supporte à tout instant plusieurs circuits virtuels dont les cellules s'intercalent de manière irrégulière dans ce qu'il est convenu d'appeler un multiplexage temporel asynchrone. Les débit nominaux des différents circuits virtuels sont différents. Chacun d'eux fluctue et la somme de ces débits fluctuants est limitée par le débit maximal de la voie de transmission. Cette somme fluctue aussi, ce qui laisse de la place à la transmission de cellules vides.

Par ailleurs, le nombre de circuits virtuels qui peuvent être séparément identifiés est très élevé et atteint 256 M. Un nombre réduit d'entre eux seulement sont actifs au même moment. La voie de transmission fournit les cellules qu'elle achemine à des équipements de commutation et de transmission situés en aval. Ces équipements reçoivent aussi des cellules d'autres voies de transmission. Comme on peut s'en rendre compte, la gestion d'une telle voie de transmission devient rapidement complexe et il est apparu rapidement nécessaire d'y adjoindre des dispositifs d'évaluation du débit de circuits virtuels afin de rapidement prendre des dispositions répressives visant à empêcher l'acheminement par la voie de transmission de toute cellule considérée comme excédentaire par rapport au débit nominal du circuit virtuel. De tels dispositifs sont connus notamment des documents FR 2 616 024 ou FR 2 648 645.

La complexité des situations sur une telle voie de transmission augmentant très rapidement avec le nombre de sources de message et/ou d'équipements de transmission, le besoin se fait également sentir pour un dispositif permettant d'analyser de manière fiable et plus complète le comportement effectif de tel ou tel autre circuit virtuel ou groupe de circuits virtuels, notamment l'étude de la répartition de leurs débits effectifs pendant une période donnée, afin de mieux comprendre les interférences potentielles et optimiser la gestion de cette voie de transmission.

L'invention résout cette difficulté en proposant un dispositif de détermination de l'histogramme de débit pendant une période d'analyse donnée de cellules de circuits virtuels empruntant une voie de transmission à multiplexage temporel asynchrone, ce dispositif comprenant :
- une horloge aménagée pour fournir une heure courante,
- une première mémoire dans laquelle un emplacement contient l'heure de début qui était l'heure courante observée et enregistrée à l'occasion de la réception d'une cellule antérieure,
- une seconde mémoire dans laquelle plusieurs emplacements correspondent chacun à un intervalle de valeurs de débit de l'histogramme,
- des premiers moyens pour établir, lors de l'arrivée d'une nouvelle cellule pendant la période d'analyse prédéterminée, la durée inter-cellule, donc le débit instantané du circuit, par soustraction de l'heure de début de l'heure courante actuelle, puis pour enregistrer cette heure courante comme nouvelle heure de début dans l'emplacement de la première mémoire,
- des seconds moyens pour comparer cette durée inter-cellule avec des seuils progressifs préétablis, pour déterminer l'index de l'intervalle de valeurs de débit correspondant et pour incrémenter d'une unité l'emplacement correspondant à cette intervalle de valeurs de débit dans la seconde mémoire.

Comme on peut facilement le comprendre, le dispositif selon l'invention est tout particulièrement intéressant dans la mesure où le procédé de détermination de l'histogramme de débit de circuits virtuels consiste :
- à enregistrer dans une première mémoire l'heure de début qui était l'heure courante observée à l'occasion de la réception d'une cellule antérieure du circuit virtuel,
- à l'arrivée d'une nouvelle cellule pendant la période d'analyse prédéterminée, à établir la durée inter-cellule, donc le débit instantané du circuit, par soustraction de l'heure de début de l'heure courante actuelle, puis à enregistrer cette heure courante comme nouvelle heure de début dans l'emplacement de la première mémoire,
- à comparer cette durée inter-cellule avec des seuils progressifs préétablis, à déterminer l'index de l'intervalle de valeurs de débit correspondant, et à incrémenter d'une unité l'emplacement dans une seconde mémoire correspondant à cette intervalle de valeurs de débit.

Lorsque le dispositif est appliqué à l'histogramme de débit d'un circuit virtuel particulier ou d'un groupe de plusieurs circuits virtuels, il peut comprendre avantageusement des troisièmes moyens aptes à lire le champ d'identification d'une cellule pour déterminer si elle appartient au circuit virtuel ou au groupe de circuits virtuels analysé afin de déclencher ou non les premiers puis seconds moyens. Grâce à cette caractéristique, le dispositif peut être utilisé pour analyser seulement qu'un seul circuit virtuel particulier ou un groupe de circuits virtuels prédéfini en fonction de leur origine, ou de leur destination, ou des catégories de terminaux.

Avantageusement encore, le dispositif peut comprendre une troisième mémoire incorporant, pour chaque circuit virtuel ou groupe de circuits virtuels, plusieurs emplacements contenant les seuils progressifs définissant les intervalles de valeurs de débit de l'histogramme du circuit ou groupe de circuits virtuels considéré. Alors, la première mémoire comprend, pour chaque circuit virtuel ou groupe de circuits virtuels, un emplacement contenant l'heure de début qui était l'heure "courante observée et enregistrée à l'occasion de la réception d'une cellule antérieure du circuit virtuel ou du groupe de circuits virtuels considéré, et la troisième mémoire comprend pour chaque circuit virtuel ou chaque groupe de circuits virtuels, plusieurs emplacements correspondant chacun à un intervalle de valeurs de débit de l'histogramme considéré.

Les troisièmes moyens sont alors aptes à lire le champs d'identification d'une cellule pour déterminer si elle appartient à un circuit virtuel ou groupe de circuits virtuels analysé, et dans l'affirmative également aptes à lire le numéro d'identification du circuit ou du groupe afin de déclencher les premiers puis seconds moyens en relation avec les emplacements correspondants des première, seconde et troisième mémoires. Ainsi défini, le dispositif peut simultanément établir l'histogramme de débit d'une pluralité de circuits virtuels individuels ou d'une pluralité de groupes distincts de plusieurs circuits virtuels et ce avec des échelles de valeurs adaptées pour chaque histogramme.

Le procédé de détermination consiste alors :
- à enregistrer préalablement dans la troisième mémoire les seuils progressifs définissant les intervalles de valeurs de débit de l'histogramme,
- à lire, lors de son arrivée, le champ d'identification d'une cellule pour déterminer si elle appartient à un circuit virtuel ou groupe de circuits virtuels analysé, et dans l'affirmative, le numéro d'identification du circuit ou du groupe,
- à sélectionner dans la troisième mémoire les emplacements contenant les seuils progressifs définissant les intervalles de valeurs de débit de l'histogramme du circuit ou groupe de circuits virtuels considéré,
- à lire dans la première mémoire l'emplacement contenant l'heure de début qui était l'heure courante observée et enregistrée à l'occasion de la réception d'une cellule antérieure du circuit virtuel ou du groupe de circuits virtuels considéré,
- à déterminer la durée inter-cellule, donc le débit instantané du circuit, par soustraction de l'heure de début de l'heure courante actuelle, puis à enregistrer cette heure courante comme nouvelle heure de début dans l'emplacement de la seconde mémoire,
- à comparer cette durée inter-cellule avec les seuils progressifs de la troisième mémoire, à déterminer l'index de l'intervalle de valeurs de débit correspondant, et à incrémenter d'une unité l'emplacement dans une seconde mémoire correspondant à cet intervalle de valeurs de débit.

Selon une autre caractéristique, le dispositif peut comprendre, en outre, des quatrièmes moyens adressant cycliquement chaque emplacement de la première mémoire et déclenchant les premiers moyens pour établir une durée momentanée par soustraction de l'heure de début de l'heure courante actuelle, puis les seconds moyens pour comparer cette durée momentanée avec le seuil maximum de l'histogramme correspondant, puis, dans le cas d'un dépassement de ce seuil maximum par la durée momentanée, pour remplacer dans l'emplacement de la première mémoire la valeur de l'heure de début par une valeur de dépassement.

Les différents objets et caractéristiques de l'invention vont maintenant être exposés de façon plus détaillée dans la description qui va suivre de modes de mise en oeuvre de l'invention, pris à titre d'exemples nullement limitatifs, et en se référant aux figures annexées dans lesquelles :
- la figure 1 illustre le diagramme par blocs d'un exemple de réalisation de l'invention,
- la figure 2 illustre le diagramme par blocs d'un second exemple de réalisation incluant un module de circuit d'exploration.

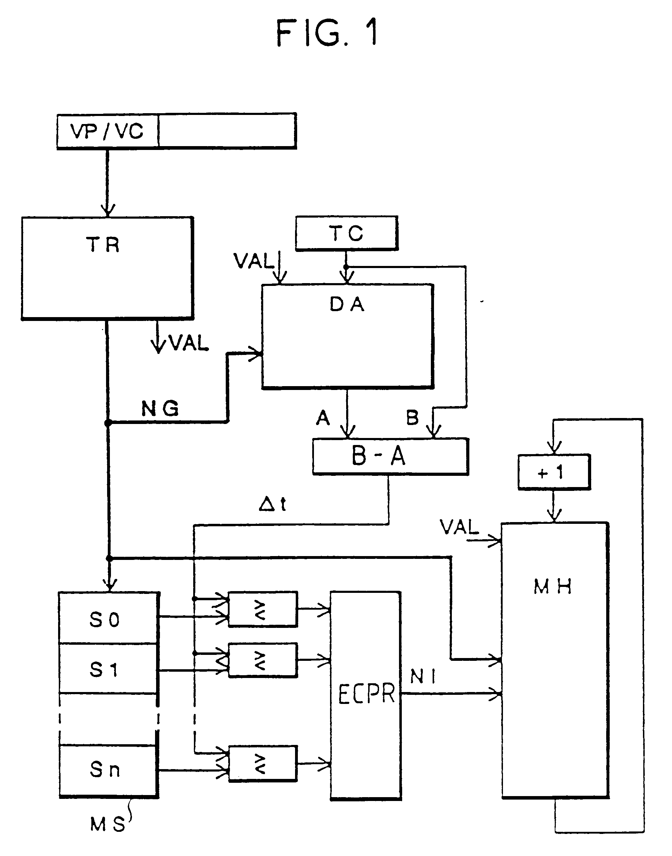

On se rapportera d'abord à la figure 1 qui représente le diagramme général d'un mode de réalisation de la présente invention. Ce dispositif est intercalé sur une voie de transmission à multiplexage temporel asynchrone. Une cellule, selon l'exemple illustré, comprend une entête ou identificateur appelé VP/VC et un corps de message. Cet identificateur caractérisé le circuit virtuel auquel appartient cette cellule. Divers circuits virtuels peuvent être regroupés en différents groupes. Soit, par exemple, en fonction de leur origine ou de leur destination ou des catégories de terminaux.

Les cellules appartenant à un même groupe se suivent à des intervalles temporels totalement aléatoires. Ces intervalles inter-cellules caractérisent le débit instantané du groupe de circuits virtuels considéré.

A chaque arrivée de cellules, le champ identifiant la cellule VP/VC est appliqué à l'entrée d'un circuit de translation TR. Ce circuit peut être vu comme une mémoire de translation qui fournit en sortie d'abord un signal VAL égal à 1 si la cellule arrivante appartient à un groupe pris en compte par le dispositif, c'est-à-dire un groupe sur lequel l'histogramme de mesure doit être effectué. Cette valeur VAL reste nulle dans tous les cas contraires. Ce circuit de translation génère également une valeur NG identifiant le groupe auquel appartient le cellule arrivante.

Le signal NG est appliqué à trois mémoires distinctes : une mémoire de seuil MS, un mémoire de date d'arrivée DA et une mémoire d'histogramme MH.

La mémoire MS contient pour chaque groupe de circuits virtuels analysé, un ensemble de valeurs de seuil croissantes nommées Sₒ à Sₙ pouvant être appliquées, à la réception du signal NG, respectivement à (n+1) sorties. Ces valeurs Sₒ à Sₙ déterminent les intervalles de mesure particuliers pour l'établissement de l'histogramme du groupe de circuits virtuels considéré. En d'autres termes, ces seuils définissent les intervalles de valeurs de débit dans lesquelles vont être accumulées les occurrences de cellules ayant cette caractéristique précise.

La mémoire DA contient, pour chaque groupe de circuits virtuels analysé, la date d'arrivée A de la dernière cellule. Cette date est fournie à partir d'un compteur de temps courant TC directement relié à cette mémoire DA. Cette valeur A est donc le temps courant observé et enregistré à l'occasion de la réception de la cellule précédente du circuit virtuel.

Lorsque cette mémoire DA reçoit simultanément la valeur d'un numéro de groupe NG et une valeur haute pour VAL, elle transmet l'heure de début A pour le groupe N à un différentiateur recevant par ailleurs une valeur B correspondant à l'heure actuelle directement fournie par le compteur de temps courant TC. La sortie de ce différentiateur B-A est donc une différence de temps Δt correspondant à la durée inter-cellule pour le groupe considéré. Simultanément, la valeur de l'heure actuelle B du compteur TC est mémorisée dans la mémoire DA comme nouvelle heure de début A.

Les (n+1) sorties de la mémoire MS sont chacune reliées à la première entrée de (n+1) comparateurs parallèles recevant toutes sur leur seconde entrée le signal de sortie Δt du différenciateur B-A. Toutes les sorties de ces (n+1) comparateurs sont reliées à l'entrée d'un encodeur de priorité ECPR dont la sortie unique est reliée à la mémoire d'histogramme MH. La mémoire MH reçoit par ailleurs les signaux NG et VAL du circuit de translation TR.

Cette mémoire MH contient, pour chaque groupe de circuits virtuels analysé, un ensemble de valeurs correspondant chacune à un nombre d'occurrences de cellules dont l'intervalle inter-cellule, ou débit instantané, était compris entre deux intervalles définis par les seuils Sₙ extraits de la mémoire de seuil MS et ce pendant une période donnée de mesure.

En d'autres termes, lors de l'apparition d'un signal NG, la mémoire de seuil MS applique en sa sortie les valeurs de seuil Sᵢ correspondant à l'histogramme en cours d'établissement pour le groupe de circuits considéré, chacun de ces seuils étant appliqué simultanément à son comparateur correspondant, et ce en même temps que l'apparition du signal Δt de durée inter-cellule. L'encodeur de priorité ECPR détermine alors parmi les comparateurs celui NI qui est le dernier à être nul, le suivant ayant basculé en une valeur positive. A la réception des signaux VAL et NG et NI, le contenu de la mémoire d'histogramme MH à l'adresse correspondante simultanément au groupe du circuit NG et à l'intervalle d'histogramme NI retenu se retrouve incrémenté de 1. Toutes les adresses de la mémoire d'histogramme MH ayant été initialisées à zéro au début de la période de mesure, cette mémoire MH contient, en fin de période de mesure, par groupe de cellules NG et pour chaque intervalle d'histogramme NI, le nombre de fois où la durée inter-cellule était comprise entre les seuils Sᵢ₋₁ et Sᵢ ce qui revient à obtenir directement l'histogramme des débits recherché.

Une fois la période de mesure achevée, le contenu de la mémoire d'histogramme MH peut être déchargé par un microprocesseur pour présentation des résultats sur écran de visualisation, impressions papier ou transcription dans un fichier sur support magnétique. Comme on peut aisément le comprendre, la longueur maximale de la période de mesure dépend directement de la capacité de cette mémoire d'histogramme MH. Typiquement, ces durées de mesure peuvent être de l'ordre de plusieurs minutes voire d'heures.

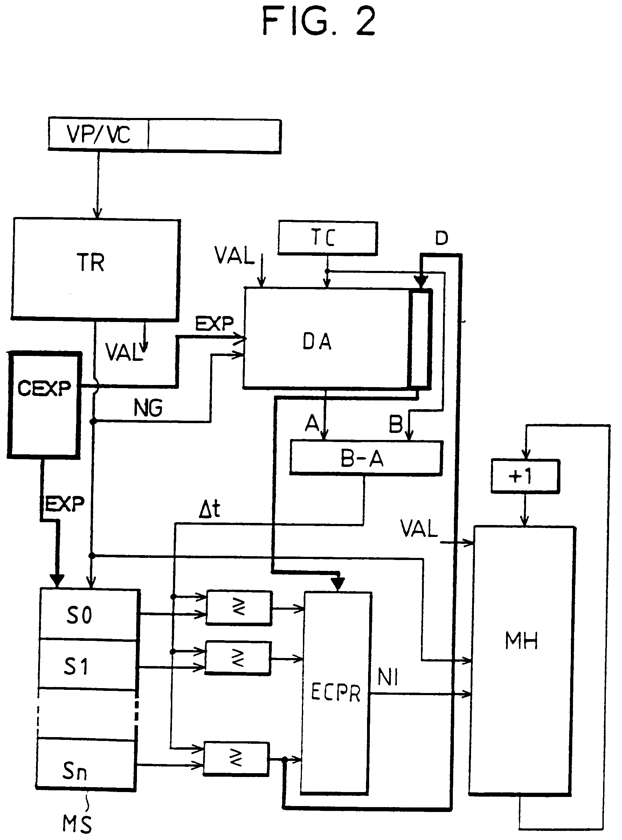

La figure 2 illustre une seconde réalisation de l'invention tenant compte du fait que la taille du compteur de temps courant TC peut être limitée au point qu'une durée inter-cellule peut dépasser sa capacité. En effet, pour un circuit virtuel particulièrement lent, ce compteur TC pourrait effectuer plusieurs cycles complets avant l'occurrence d'une cellule dont le débit instantané serait artificiellement réduit à la dernière valeur de ce compteur. Pour obvier ce problème, il est prévu un dispositif supplémentaire, illustré en traits forts sur cette figure 2, comprenant un compteur d'exploration CEXP adressant cycliquement une valeur EXP venant se substituer alors à la valeur NG à l'entrée de la mémoire d'arrivée DA et de la mémoire de seuil MS.

A l'approche de chaque fin de cycle de l'horloge TC, est calculée comme la valeur Δt dans le cas normal d'une arrivée de cellules, et cette valeur Δt2 est comparée au seuil Sₙ. Lorsqu'il apparaît que cette valeur Δₜ₂ est supérieure ou égale à l'indice maximum Sₙ, donc que le délai écoulé depuis la dernière apparition d'une cellule du groupe donné est supérieur au seuil du dernier intervalle de l'histogramme prédéterminé, il convient d'enregistrer un indicateur de "dépassement", D, dans la mémoire d'arrivée DA en l'associant à l'heure de début A, à la même adresse. Alors, à l'arrivée de la cellule suivante du groupe considéré, la lecture de cet indicateur D force la sortie de l'encodeur de priorité à la valeur maximum n.

Des moyens non représentés permettent l'accès aux circuits TR, MS et MH par un microprocesseur afin de préprogrammer le choix des groupes, les seuils des histogrammes respectifs puis le recueil des histogrammes établis.

## Revendications

1. Dispositif de détermination de l'histogramme de débits de cellules de circuits virtuels empruntant une voie de transmission à multiplexage temporel asynchrone pendant une période d'analyse prédéterminée, caractérisé en ce qu'il comprend :
- une horloge (TC) aménagée pour fournir une heure courante (B),
- une première mémoire (DA) dans laquelle un emplacement contient l'heure de début (A) qui était l'heure courante observée et enregistrée à l'occasion de la réception d'une cellule antérieure,
- une seconde mémoire (MH) dans laquelle plusieurs emplacements correspondent chacun à un intervalle de valeurs de débit de l'histogramme,
- des premiers moyens pour établir, lors de l'arrivée d'une nouvelle cellule pendant la période d'analyse prédéterminée, la durée inter-cellule (Δt), donc le débit instantané du circuit, par soustraction de l'heure de début (A) de l'heure courante actuelle (B), puis pour enregistrer cette heure courante (B) comme nouvelle heure de début (A) dans l'emplacement de la première mémoire,
- des seconds moyens pour comparer cette durée inter-cellule (Δt) avec des seuils progressifs (Sᵢ) préétablis, pour déterminer l'index (NI) de l'intervalle de valeurs de débit correspondant et pour incrémenter d'une unité l'emplacement (NG, NI) correspondant à cette intervalle de valeurs de débit dans la seconde mémoire.

2. Dispositif selon la revendication 1 de détermination de l'histogramme de débit d'un circuit virtuel particulier ou d'un groupe de plusieurs circuits virtuels acheminant chacun des cellules et empruntant une même voie de transmission à multiplexage temporel asynchrone, caractérisé en ce qu'il comprend de plus des troisièmes moyens (TR) aptes à lire le champ d'identification d'une cellule pour déterminer si elle appartient au circuit virtuel ou au groupe de circuits virtuels analysé afin de déclencher ou non les premiers puis seconds moyens.

3. Dispositif selon la revendication 2 de détermination simultanée de l'histogramme de débit d'une pluralité de circuits virtuels distincts de plusieurs circuits virtuels acheminant chacun des cellules et empruntant une même voie de transmission à multiplexage temporel asynchrone, caractérisé
- en ce qu'il comprend une première mémoire (MS) incorporant, pour chaque circuit virtuel ou groupe de circuits virtuels, plusieurs emplacements contenant les seuils progressifs (Sᵢ) définissant les intervalles de valeurs de débit de l'histogramme du circuit ou groupe de circuits virtuels considéré,
- en ce que la première mémoire (DA) comprend, pour chaque circuit virtuel ou groupe de circuits virtuels, un emplacement contenant l'heure de début (A) qui était l'heure courante observée et enregistrée à l'occasion de la réception d'une cellule antérieure du circuit virtuel ou du groupe de circuits virtuels considéré ; et la troisième mémoire (MH) comprend pour chaque circuit virtuel ou chaque groupe de circuits virtuels, plusieurs emplacements correspondant chacun à un intervalle de valeurs de débit de l'histogramme considéré,
- et en ce que les troisièmes moyens (TR) sont aptes à lire le champ d'identification d'une cellule pour déterminer si elle appartient à un circuit virtuel ou groupe de circuits virtuels analysé, et dans l'affirmative apte à lire le numéro d'identification du circuit ou du groupe afin de déclencher les premiers puis seconds moyens en relation avec les emplacements correspondants des première, seconde et troisième mémoires.

4. Dispositif selon l'une des revendications précédente, caractérisé en ce qu'il comprend, en outre, des quatrième moyens (CEXP) adressant cycliquement chaque emplacement de la première mémoire (DA) et déclenchant les premiers moyens pour établir une durée momentanée (A) de l'heure courant actuelle (B), puis les seconds moyens pour comparer cette durée momentanée (Δt2) avec le seuil maximum (Sₙ) de l'histogramme correspondant, puis, dans le cas d'un dépassement de ce seuil maximum par la durée momentanée, pour associer un indicateur de dépassement (D) à la valeur de l'heure de début (A) dans la première mémoire (DA).

5. Procédé de détermination de l'histogramme de débit de cellules de circuits virtuels empruntant une voie de transmission à multiplexage temporel asynchrone pendant une période prédéterminée, caractérisé en ce qu'il consiste :
- à enregistrer dans une première mémoire (DA) l'heure de début (A) qui était l'heure courante observée à l'occasion de la réception d'une cellule antérieure du circuit virtuel,
- à l'arrivée d'une nouvelle cellule pendant la période d'analyse prédéterminée, à établir la durée inter-cellule (Δt) donc le débit instantané du circuit, par soustraction de l'heure de début (A) de l'heure courante actuelle (B), puis à enregistrer cette heure courante comme nouvelle heure de début dans l'emplacement de la première mémoire,
- à comparer cette durée inter-cellule (Δt) avec les seuils progressifs préétablis (Sᵢ), à déterminer l'index (NI) de l'intervalle de valeurs de débit correspondant, et à incrémenter d'une unité l'emplacement dans une seconde mémoire (MH) correspondant à cet intervalle de valeurs de débit.

6. Procédé selon la revendication 5 de détermination de l'histogramme de débit d'un circuit virtuel particulier ou d'un groupe de plusieurs circuits virtuels acheminant chacun des cellules et empruntant une même voie de transmission à multiplexage temporel asynchrone, caractérisé en ce qu'il consiste, à l'arrivée d'une nouvelle cellule, à d'abord lire le champ d'identification de la cellule pour déterminer si elle appartient au circuit virtuel ou au groupe de circuits virtuels analysé et à ne poursuivre le procédé que dans l'affirmative.

7. Procédé selon la revendication 6 de détermination simultanée de l'histogramme de débit d'une pluralité de circuits virtuels ou une pluralité de groupes distincts de plusieurs circuits virtuels acheminant chacun des cellules et empruntant une même voie de transmission à multiplexage temporel asynchrone, caractérisé en ce qu'il consiste :
- à enregistrer préalablement dans une troisième mémoire (MS) les seuils progressifs (Sᵢ) définissant les intervalles de valeurs de débit de l'histogramme,
- à lire, lors de son arrivée, le champ d'identification d'une cellule pour déterminer si elle appartient à un circuit virtuel ou groupe de circuits virtuels analysé, et dans l'affirmative, le numéro d'identification du circuit ou du groupe,
- à sélectionner dans la troisième mémoire (MS) les emplacements contenant les seuils progressifs (Sᵢ) définissant les intervalles de valeurs de débit de l'histogramme du circuit ou groupe de circuits virtuels considéré,
- à lire dans la première mémoire (DA) l'emplacement contenant l'heure de début (A) qui était l'heure courante observée et enregistrée à l'occasion de la réception d'une cellule antérieure du circuit virtuel ou du groupe de circuits virtuels considéré,
- à déterminer la durée inter-cellule (Δt), donc le débit instantané du circuit, par soustraction de l'heure de début (A) de l'heure courante actuelle (B), puis à enregistrer cette heure courante comme nouvelle heure de début dans l'emplacement de la seconde mémoire,
- à comparer cette durée inter-cellule (Δt) avec les seuils progressifs (Sᵢ) de la troisième mémoire, à déterminer l'index (NI) de l'intervalle de valeurs de débit correspondant, et à incrémenter d'une unité l'emplacement dans une seconde mémoire correspondant à cette intervalle de valeurs de débit.

8. Procédé selon l'une des revendications 5 à 7, caractérisé en ce qu'il consiste, en outre, à adresser cycliquement chaque emplacement de la première mémoire (DA) et établir une durée momentanée (Δt2) par soustraction de l'heure de début (A) de l'heure courante actuelle (B), puis à comparer cette durée momentanée (Δt2) avec le seuil maximum (Sₙ) de l'histogramme correspondant, puis, dans le cas d'un dépassement de ce seuil maximum par la durée momentanée, à associer une valeur de dépassement (D) à la valeur de l'heure de début (A), dans la première mémoire (DA).
